# EUROPEAN PATENT SPECIFICATION

(11) **EP 4 225 985 B1**
(45) Date of publication and mention of the grant of the patent: **03.09.2025**
(21) Application number: 21878126.8
(22) Date of filing: 08.07.2021
(51) Int. Cl.: D06F 37/00, G02B 13/14, D06F 58/00

(54) **A LAUNDRY DRYER COMPRISING A UV LIGHT SOURCE**
WÄSCHETROCKNER MIT UV-LICHTQUELLE
SÈCHE-LINGE COMPRENANT UNE SOURCE DE LUMIÈRE UV

(30) Priority: 05.10.2020 TR 202015759
(43) Date of publication of application: 16.08.2023
(73) Proprietor: Arçelik Anonim Sirketi, 34445 Istanbul (TR)
(72) Inventor: ÇALICIOGLU, Hüseyin Mert, 34445 Beyoglu/Istanbul (TR); SIR, Gökhan, 34445 Beyoglu/Istanbul (TR); YILMAZ, Nihal, 34445 Beyoglu/Istanbul (TR); SERT, Abdullah, 34445 Beyoglu/Istanbul (TR); ÖZKAN, Yasemin, 34445 Beyoglu/Istanbul (TR)
(86) International application number: PCT/TR2021/050702
(87) International publication number: WO 2022/075939

(56) References cited:
- EP-A1- 3 449 947
- WO-A1-2007/058478
- CN-A- 106 245 294
- CN-U- 209 070 204
- CN-U- 210 442 564
- DE-U1- 202008 002 488
- KR-A- 20120 031 332
- KR-A- 20200 109 193

## Description

The present invention relates to a laundry dryer comprising a UV light source.

It is aimed to eliminate viruses and bacteria on the laundry while the same is treated and dried in laundry dryers. Additionally, UV light sources are used to eliminate viruses and bacteria on the laundry in the laundry dryers. The virus and bacteria elimination capacity of the UV light is directly proportional to the intensity of the UV light applied. The laundry loaded into the drum is not homogeneously distributed in the drum during the drying process. During the drying process, the laundry gathers at an area close to the door at the front side of the drum due to the rotational movement of the drum. In the laundry dryers, the UV light sources are generally disposed on the front bearing which rotatably supports the drum or on the door which provides access into the drum. The rays emitted by the UV light sources are not homogeneously distributed into the drum. In the state of the art laundry dryers having UV light sources, the UV rays are more concentrated in the vicinity of the rear wall of the drum which allows air intake into the drum.

In the state of the art Patent Application No. CN106245294, a laundry dryer comprising a UV light source is disclosed.

In the state of the art European Patent Application No. EP3449947, a laundry dryer comprising a UV light source is disclosed.

The aim of the present invention is the realization of a laundry dryer with improved sterilization performance.

The laundry dryer of the present invention comprises a body; a drum which is disposed in the body; a housing which is provided in the body and of which at least one surface faces the inside of the drum; and a UV light source which is disposed in the housing and which emits UV rays into the drum. The housing is disposed on the front bearing or the door so as to be positioned at the upper half of the opening allowing access into the drum.

The laundry dryer of the present invention further comprises a lens which covers the surface of the housing facing the drum and which has a convex section at the upper side thereof and a concave section at the lower side thereof. The lens is manufactured from a quartz material allowing UV light transmittance or a soda barium material. In the preferred version of the present invention, the lens is manufactured from a quartz material. The upper side of the lens is convex while the lower side thereof is concave. While the upper half of the lens is biconvex with both sides being convex, the lower half of the lens is biconcave with both sides being concave. Thus, the rays emitted by the UV light source towards the upper and middle sections of the drum are mostly directed towards the lower side of the drum while the rays emitted by the UV light source towards the lower section of the drum are mostly directed towards the front side of the drum. By means of the lens with the upper section being convex and the lower section being concave, a higher amount of UV rays are directed towards the areas where the laundry is highly concentrated.

In an embodiment of the present invention, the laundry dryer comprises a frame which peripherally supports the lens so as to fix the lens to the surface of the housing facing the drum. By fixing the frame to the housing from one end, the lens is squeezed between the housing and the frame.

In an embodiment of the present invention, the laundry dryer comprises a sealing member which is disposed between the frame and the lens. The sealing member, which is manufactured from a flexible material, absorbs the pressure exerted by the frame onto the lens so as to prevent the lens from breaking due to a force which may be applied onto the frame.

In an embodiment of the present invention, the laundry dryer comprises an additional sealing member which is disposed between the frame and the housing.

In an embodiment of the present invention, the laundry dryer comprises a reflector which is provided in the housing and which reflects the rays emitted by the UV light source into the drum. The reflector is manufactured from aluminum or Teflon material with high reflection performance. The reflector is disposed into the housing so as to be positioned behind the UV light source, and has a rounded form so as to surround the UV light source both from above and below. Thus, the UV rays to be emitted by the UV light source into the housing are transmitted into the drum by being reflected from the reflector surface.

In an embodiment of the present invention, the laundry dryer comprises a holder which enables the reflector to be fixed into the housing. In a preferred version of the present invention, by means of the holder placed into a recess formed on the reflector, the reflector is fixed into the housing.

In an embodiment of the present invention, the UV light source emits UV rays in the UV-C wavelength. The UV-C rays damages the DNA of bacteria and RNA of viruses so as to eliminate them.

By means of the present invention, a laundry dryer is realized, wherein the UV rays are more efficiently dispersed into the drum by means of a lens having a convex section and a concave section.

The advantages of the laundry dryer of the present invention will be disclosed with the detailed description of the embodiments with reference to the accompanying figure, where:

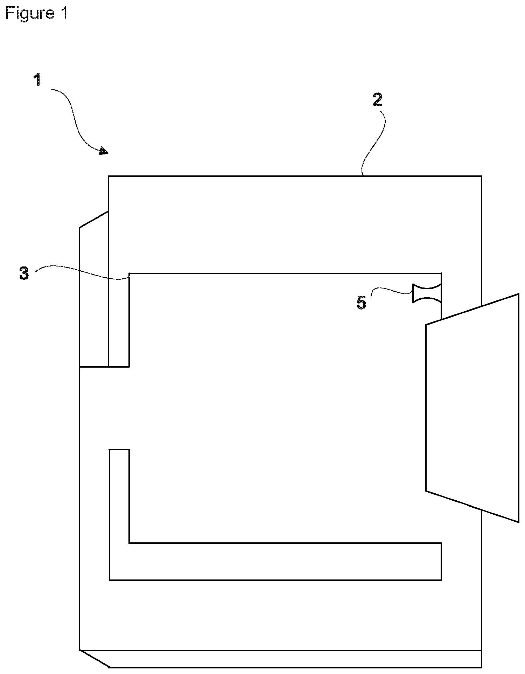

Figure 1 - is the schematic view of the laundry dryer in an embodiment of the present invention.

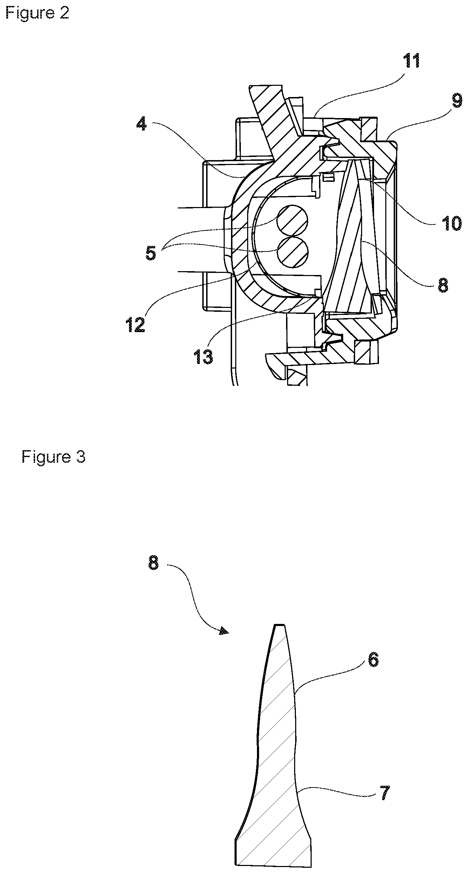

Figure 2 - is the cross-sectional view of the housing in an embodiment of the present invention.
Figure 3 - is the cross-sectional view of the lens in an embodiment of the present invention.

The following numerals are referred to in the description of the present invention:
- 1.: Laundry dryer
- 2.: Body
- 3.: Drum
- 4.: Housing
- 5.: UV light source
- 6.: Convex section
- 7.: Concave section
- 8.: Lens
- 9.: Frame
- 10.: Sealing member
- 11.: Additional sealing member
- 12.: Reflector
- 13.: Holder

The laundry dryer (1) comprises a body (2); a drum (3) which is placed into the body (2) and wherein the laundry is loaded; a housing (4) which is provided in the body (2) and of which at least a part faces the interior of the drum (3); and a UV light source (5) which is disposed in the housing (4) and which emits UV light into the drum (3). The housing (4) is disposed on the front bearing which rotatably supports the drum (3) or the door which allows access into the drum (3). By placing the UV light source (5) into the housing (4), the laundry in the drum (3) is sterilized by means of UV rays.

The laundry dryer (1) of the present invention further comprises a lens (8) which is at least partially surrounds the housing (4), which is manufactured from a material with UV light transmittance properties and which has a convex section (6) and a concave section (7) arranged under the convex section (6). The convex section (6) is in plane convex form with a convex surface and a flat surface or in biconvex form with both surfaces being convex. The convex surfaces collect the light at a focal point. In other words, parallel rays converge after passing through the convex surface. The concave section (7) is in plane concave form with a concave surface and a flat surface or in biconcave form with both surfaces being concave. The concave surfaces have divergent characteristics. Parallel rays diverge after passing through a concave surface. The lens (8) disposed on the part of the housing (4) facing the drum (3) has a convex section (6) with a convex surface. The convex section (6) forms the upper half of the lens (8). Thus, the rays emitted by the UV light source (5) towards the upper part of the drum (3) are passed through the convex section (6) so as to be directed towards the lower part of the drum (3) where the laundry is highly concentrated. While being treated in the laundry dryer (1), the laundry generally gathers at the front side of the drum (3) due to the movement of the drum (3). The rays emitted by the UV light source (5) in the housing (4) disposed on the front bearing or the cover are directed towards the front part of the drum (3) by means of the concave section (7) under the convex section (6). After passing through the concave section (7), the UV rays sent onto the concave section (7) refract towards the front side of the drum (3) by increasing the angle with the rotational axis of the drum (3). Thus, the UV rays reach the laundry at the front side of the drum (3).

In another embodiment of the present invention, the laundry dryer (1) comprises a frame (9) which is fixed to the housing (4) from one end and which peripherally supports the lens (8) so as to enable the lens (8) to be fixed to the housing (4). By being squeezed between the housing (4) and the frame (9), the lens (8) is fixed onto the surface of the housing (4) facing the drum (3).

In an embodiment of the present invention, the laundry dryer (1) comprises a sealing member (10) which is disposed between the frame (9) and the lens (8). The UV light source (5) comprises chemical substances such as mercury, which are harmful to human body. By means of the sealing member (10), said chemical substances which may be released due to the breaking of the UV light source (5) are prevented from leaking into the drum (3) and enabled to stay in the housing (4).

In an embodiment of the present invention, the laundry dryer (1) comprises an additional sealing member (11) which is disposed between the frame (9) and the housing (4). Thus, the moisture on the laundry is prevented from reaching to the interior of the housing (4) or to electronic components disposed at the rear side of the housing (4).

In an embodiment of the present invention, the laundry dryer (1) comprises a reflector (12) which is provided in the housing (4) so as to be positioned behind the UV light source (5) and which reflects all the rays emitted by the UV light source (5) into the drum (3). By means of the reflector (12), the UV rays emitted by the UV light source (5) towards the interior of the housing (4) are directed into the drum (3). Thus, the amount of UV rays to be sent onto the laundry is increased and the laundry is sterilized.

In another embodiment of the present invention, the laundry dryer (1) comprises at least one holder (13) which is disposed in the housing (4) and which enables the reflector (12) to be fixed into the housing (4). The holder (13) is in the form of a protrusion into the housing (4), and contacts the reflector (12) so as to prevent the reflector (12) from moving due to mechanical effects. In the preferred version of the present invention, the reflector (12) is squeezed between two holders (13) disposed at the upper and lower parts of the housing (4) such that the reflector (12) is fixed in the housing (4).

In an embodiment of the present invention, the laundry dryer (1) comprises a UV light source (5) suitable for emitting UV-C light. The UV-C rays have a shorter wavelength than the UV-A or UV-B rays, and have a higher absorption effect. Thus, the bacteria and virus elimination capacity is higher than other rays.

By means of the present invention, a laundry dryer (1) is realized, wherein a higher amount of UV rays is enabled to be sent to the lower and front parts of the drum close to the door where the laundry is highly concentrated by means of the lens (8) having a convex section (6) and a concave section (7) such that the sterilization performance thereof is improved.

## Claims

1. A laundry dryer (1) **comprising** a body (2); a drum (3) which is placed into the body (2) and wherein the laundry is loaded; a housing (4) which is provided in the body (2) and of which at least a part faces the interior of the drum (3); and a UV light source (5) which is disposed in the housing (4) and which emits UV light into the drum (3), **characterized by** a lens (8) which is at least partially surrounds the housing (4), which is manufactured from a material with UV light transmittance properties and which has a convex section (6) and a concave section (7) arranged under the convex section (6).

2. A laundry dryer (1) as in Claim 1, **characterized by** a frame (9) which is fixed to the housing (4) from one end and which peripherally supports the lens (8) so as to enable the lens (8) to be fixed to the housing (4).

3. A laundry dryer (1) as in Claim 2, **characterized by** a sealing member (10) which is disposed between the frame (9) and the lens (8).

4. A laundry dryer (1) as in Claim 2 or Claim 3, **characterized by** an additional sealing member (11) which is disposed between the frame (9) and the housing (4).

5. A laundry dryer (1) as in any one of the above claims, **characterized by** a reflector (12) which is provided in the housing (4) so as to be positioned behind the UV light source (5) and which reflects all the rays emitted by the UV light source (5) into the drum (3).

6. A laundry dryer (1) as in Claim 5, **characterized by** at least one holder (13) which is disposed in the housing (4) and which enables the reflector (12) to be fixed into the housing (4).

7. A laundry dryer (1) as in any one of the above claims, **characterized by** the UV light source (5) suitable for emitting UV-C light.

## Patentansprüche

1. Ein Wäschetrockner (1) **umfasst** einen Körper (2); eine Trommel (3), die in dem Körper (2) platziert ist und in die die Wäsche geladen wird; ein Gehäuse (4), das in dem Körper (2) vorgesehen ist und von dem zumindest ein Teil dem Inneren der Trommel (3) zugewandt ist; und eine UV-Lichtquelle (5), die in dem Gehäuse (4) angeordnet ist und die UV-Licht in die Trommel (3) emittiert, **gekennzeichnet ist er durch** eine Linse (8), die zumindest teilweise das Gehäuse (4) umgibt, die aus einem Material mit UV-Lichtdurchlässigkeitseigenschaften hergestellt ist und die einen konvexen Abschnitt (6) und einen konkaven Abschnitt (7) aufweist, der unter dem konvexen Abschnitt (6) angeordnet ist.

2. Ein Wäschetrockner (1) wie in Anspruch 1 aufgeführt, **ist dadurch gekennzeichnet, dass** er einen Rahmen (9) aufweist, der an einem Ende am Gehäuse (4) befestigt ist und der die Linse (8) am Umfang abstützt, so dass die Linse (8) am Gehäuse (4) befestigt werden kann.

3. Ein Wäschetrockner (1) wie in Anspruch 2 aufgeführt, **ist dadurch gekennzeichnet, dass** ein Dichtungselement (10), das zwischen dem Rahmen (9) und der Linse (8) angeordnet ist.

4. Ein Wäschetrockner (1) wie in Anspruch 2 oder 3 aufgeführt, **ist dadurch gekennzeichnet, dass** ein zusätzliches Dichtelement (11) zwischen dem Rahmen (9) und dem Gehäuse (4) angeordnet ist.

5. Ein Wäschetrockner (1) wie in einem der vorherigen Ansprüchen aufgeführt, **ist dadurch gekennzeichnet, dass** der Reflektor (12), der in dem Gehäuse (4) so vorgesehen ist, dass er hinter der UV-Lichtquelle (5) positioniert ist, und der alle von der UV-Lichtquelle (5) abgegebenen Strahlen in die Trommel (3) reflektiert.

6. Ein Wäschetrockner (1) wie in Anspruch 5 aufgeführt, **ist dadurch gekennzeichnet, dass** mindestens eine Halterung (13), die im Gehäuse (4) angeordnet ist und die Befestigung des Reflektors (12) im Gehäuse (4) ermöglicht.

7. Ein Wäschetrockner (1) wie in einem der vorherigen Ansprüchen aufgeführt, **ist dadurch gekennzeichnet, dass** die UV-Lichtquelle (5) geeignet ist, UV-C-Licht zu emittieren.

## Revendications

1. Un sèche-linge (1) **comprenant** un corps (2) ; un tambour (3) qui est disposé dans le corps (2) et dans lequel le linge est chargé ; un boîtier (4) qui est prévu dans le corps (2), et dont au moins une partie est orientée vers l'intérieur du tambour (3) ; et une source de lumière UV (5) qui est disposée dans le boîtier (4) et qui émet une lumière UV dans le tambour (3), **caractérisé par** une lentille (8) qui entoure au moins partiellement le boîtier (4), qui est fabriquée à partir d'un matériau ayant des propriétés de transmission de la lumière UV, et qui possède une section convexe (6) et une section concave (7) disposée sous la section convexe (6).

2. Un sèche-linge (1) selon la Revendication 1, **caractérisé par** un cadre (9) qui est fixé au boîtier (4) à une extrémité, et qui soutient périphériquement la lentille (8) de manière à permettre de fixer la lentille (8) au boîtier (4).

3. Un sèche-linge (1) selon la Revendication 2, **caractérisé par** un élément d'étanchéité (10) qui est disposé entre le cadre (9) et la lentille (8).

4. Un sèche-linge (1) selon la Revendication 2 ou 3, **caractérisé par** un élément d'étanchéité supplémentaire (11) qui est disposé entre le cadre (9) et le boîtier (4).

5. Un sèche-linge (1) selon l'une quelconque des revendications précédentes, **caractérisé par** un réflecteur (12) qui est prévu dans le boîtier (4), de manière à être positionné derrière la source de lumière UV (5), et qui réfléchit tous les rayons émis par la source de lumière UV (5) vers l'intérieur du tambour (3).

6. Un sèche-linge (1) selon la revendication 5, **caractérisé par** au moins un support (13) qui est disposé dans le boîtier (4) et qui permet au réflecteur (12) d'être fixé au boîtier (4).

7. Un sèche-linge (1) selon l'une quelconque des revendications précédentes, **caractérisé par** la source de lumière UV (5) capable d'émettre une lumière UV-C.
